# EUROPEAN PATENT SPECIFICATION

(11) **EP 1 053 668 B1**
(45) Date of publication and mention of the grant of the patent: **30.07.2008**
(21) Application number: 00201586.5
(22) Date of filing: 02.05.2000
(51) Int. Cl.: A01B 73/04, A01D 87/10, A01D 78/10

(54) **A device for bringing an implement from an operative position into a transport position**
Vorrichtung die ein ein Gerät von einer operativen Position in eine Transportposition überträgt
Dispositif pour transférer un outil d'une position de travail dans une position de transport

(30) Priority: 20.05.1999 NL 1012108
(43) Date of publication of application: 22.11.2000
(73) Proprietor: MAASLAND N.V., 3147 PA Maassluis (NL)
(72) Inventor: van der Vlugt, Hendrik Hans, 3141 HT Maassluis (NL)
(74) Representative: Corten, Maurice Jean F.M.

(56) References cited:
- EP-A- 0 645 075
- DE-A- 19 714 121
- FR-A- 2 128 153
- FR-A- 2 675 979
- US-A- 3 474 869

## Description

The invention relates to a device as described in the preamble of claim 1.

Such a device is known from e.g. the brochure of Messrs. Pöttinger, Cat Nova (Pöttinger Mähwerke/ Heumaschinen Cat/Hit/Top, C/H/T - 11/97). The advantage of such a device is that, because of the fact that the point of application of the lifting arm is located on or near the perpendicular line on the bottom through the centre of gravity, it is possible to set the ground pressure of the cutter bar uniformly over the entire length by means of a relatively light and cheap cylinder and spring construction. However, this device has the disadvantage that the transport height of the machine is considerable, so that the maximum working width of the cutter bar is limited.

Another known device, in which the ground pressure can be set by means of another principle, is shown in the brochure of Messrs. Lely; Optimo (Lely Optimo C). This machine is provided with a lifting arm which is fastened to the end of the cutter bar. Moreover, said end of the cutter bar is hingeably connected to a carrier beam. The medians parallel to the lifting arm and the carrier beam intersect approximately in the centre of gravity of the cutter bar. The device has the advantage that the transport height of the cutter bar is relatively smaller than the transport height of the aforementioned device. However, in view of the fact that the lifting arm is fastened to the end of the cutter bar, a heavy, complicated and expensive construction is required for adjusting the ground pressure of the cutter bar. Moreover, a heavy arm is required for bringing the cutter bar from the operative position into the transport position.

European patent application 0 645 075 discloses a carrier for an implement having a pivotable arm to move the implement from an operative position to a folded, a vertically oriented position. Pivoting down the arm, the implement is moved radially outward with respect to the arm.

It is an object of the invention to obviate the above-mentioned drawbacks. In accordance with the invention this is achieved by the characterizing part of claim 1.

This device has the advantage that the arm may be designed as a light and compact one, which makes a cheaper construction possible. The ground pressure can be uniformly adjusted over the entire working width of the machine, while a relatively light and cheap cylinder and/or spring construction will suffice. Moreover, by means of this construction there is achieved a small transport height. Finally, the implement can easily be brought into a stable transport position. According to an inventive feature, the connecting element is hingeably connected to the implement and the second end of the arm. In this manner the implement can easily be brought into the transport position. In a preferred embodiment, the connecting element is designed as a connection which is adjustable in length, such as a cylinder, preferably a telescopic cylinder. Thus it is achieved that the arm is able to move the implement to a transport position, while the second end of the arm is able to move in the direction of the second end of the implement.

In an alternative embodiment, the connecting element is constituted by a guide element for guiding the arm and a guide path along which the guide element moves during or prior to the adjustment of the implement from an operative position to a transport position. Thus it is also achieved that the arm is able to move the implement to a transport position, while the second end of the arm is able to move in the direction of the second end of the implement. The guide path extends at least from a point of application in the transport position to a point of application in the operative position. In a preferred embodiment, the guide path comprises a tube, groove or cable and the guide element comprises a wheel or a pulley. A connecting element may also consist of a combination of a fixed element, such as a bar, or a connection which is adjustable in length, and a guide path with a guide element.

According to an inventive feature, the arm is connected in the first hinge point to a frame for carrying the implement, and the first end of the implement is hingeably connected to the frame in a second hinge point. The frame is preferably connected to a tractor. In this manner it is achieved that the implement is supported by the frame in the transport position. Moreover, it is achieved that the implement can be brought into an operative position in which the implement has not too many degrees of freedom. This is important when the implement is constituted by a plough, a rotary harrow or a mowing machine.

An adjusting element for adjusting the arm is disposed on the frame and is connected to the arm. Said adjusting element preferably consists of one or more control cylinders and/or one or more springs. The adjusting element may be connected to an adjusting plate for adjusting the arm, which adjusting plate is hingeably connected to the arm. As a result of this hinged connection of the adjusting plate to the arm, it is achieved that the implement is capable of hinging to a limited extent about the second hinge point in the operative position. When the implement is brought into the transport position, the adjusting element is withdrawn so that the adjusting plate is moved against a stop, after which the arm with the implement is moved to the transport position.

In accordance with an inventive feature, the frame consists of a first and a second frame, said frames being mutually hingeably connected by means of a third hinge point which is disposed between the first and the second hinge point. In this manner it is achieved that the second frame is capable of moving relative to the first frame, so that the implement is capable of hinging about the third hinge point in upward and downward direction. This is particularly important when the implement comprises a mowing machine which has to be supported by the ground. The first frame will usually be fixedly connected to the tractor, so that the second frame is capable of hinging relative to the first frame.

The device may be provided with one or more stop means for forming a stop in the transport position and/or the operative position. In this manner there is achieved a stable transport position and/or operative position. The stop means comprise a chain which is disposed between the first and the second frame. There may also be provided stop means near the point of application in the transport position and/or near the point of application in the operative position.

The level of the centre of gravity of the implement in the transport position is lower than the maximum level reached by the centre of gravity of the implement during the adjustment of the implement from the operative position to the transport position. Because of the fact that the centre of gravity of the implement in the transport position is always at a lower level than the centre of gravity of the implement at the maximum level of the path described by the centre of gravity of the implement during the adjustment of the implement from the operative position to the transport position, there is achieved a stable transport position.

Besides, it is also possible to bring the implement from an operative position into a transport position about a vertical hinge point, while the implement is moved from a position next to the tractor to a position behind the tractor and the centre of gravity of the implement does practically not reach a higher level. In the operative position the implement is then located behind the tractor, so that the transport width and the transport height are small, while the transport length is relatively small. In such a device the implement is preferably provided with at least one support wheel.

According to a last inventive feature, the implement comprises a driven implement, preferably a mowing machine.

The invention will now be explained in further detail with reference to the accompanying drawing.
Figure 1 shows a device according to the invention, said device being provided with a connecting element comprising a guide path and a guide element, and
Figure 2 shows a device according to the invention, said device being provided with a connecting element comprising a fixed hingeable connecting element.

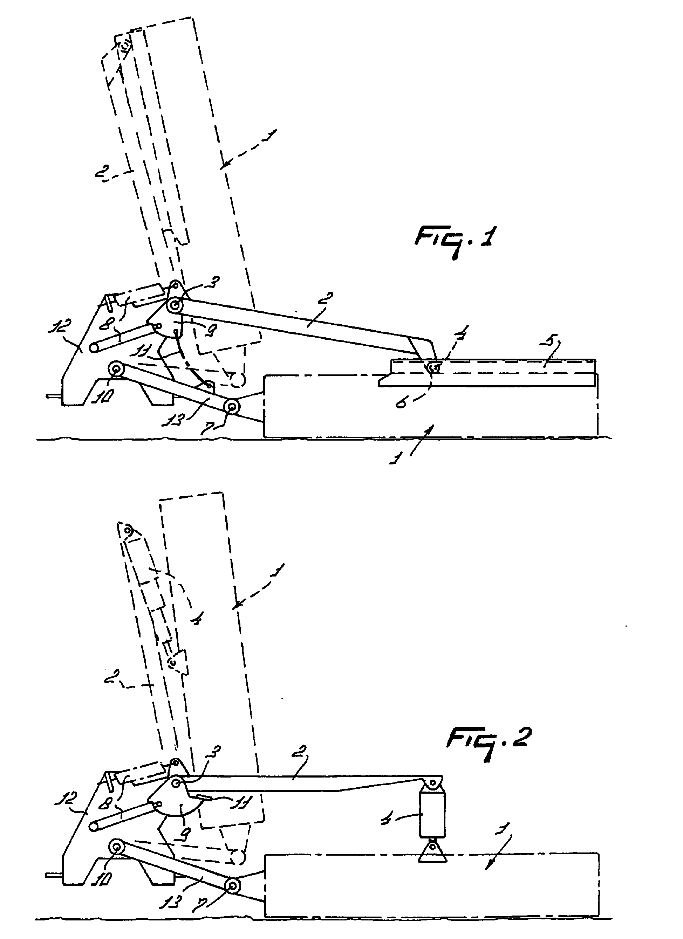

Figure 1 shows a device according to the invention for bringing an implement 1 from an operative position into a transport position. The transport position of the implement is indicated by broken lines in Figure 1. The implement comprises a first side and a second side, said second side being located further from the first hinge point 3 than the first end. The device shown in Figure 1 is provided with a connecting element which comprises a guide path 5 and a guide element 6. The implement is movable by means of an arm 2 which is connected, hingeably in a first hinge point 3 at a first side, to a first frame 12. Said first frame is preferably connected to the tractor. The implement 1 is hingeably connected to a second frame 13 in a second hinge point 7. The second frame 13 is hingeably connected to the first frame 12 in a third hinge point 10. The arm is movable by means of an adjusting element 8 which is hingeably disposed between the first frame 12 and an adjusting plate 9. Between the adjusting plate 9 and the second frame 13 there are disposed stop means 11 which are constituted by a chain.

During the adjustment of the implement 1 from the operative position to the transport position, the arm 2 moves in the direction of the second end of the implement 1, while the distance between the second end of the implement 1 and the first hinge point 3 becomes smaller. The chain prevents the second frame from resting on the ground during the adjustment of the implement to the transport position and when the implement is in the transport position. The guide path 5 may also be provided with stop means 11 preventing this.

Figure 2 shows an alternative device according to the invention for bringing an implement 1 from an operative position into a transport position. The transport position of the implement is indicated in dotted lines in Figure 2. The further characteristics of the device shown in Figure 2 are identical to those of the device depicted in Figure 1. As the device shown in Figure 2 is provided with a fixed connecting element, preferably comprising a bar, stop means for preventing the second frame from resting on the ground in the transport position are not required.

## Claims

1. A device for bringing an implement (1), such as e.g. an agricultural implement, from an operative position into a transport position, said device being provided with an arm (2) for adjusting the implement (1), which arm (2) is provided with a first and a second end, while the first end of the arm (2) is provided with a first hinge point (3) for enabling the arm (2) to hinge, and the second end of the arm (2) is provided, in a point of application, with a connecting element (4) for connecting the implement (1) to the arm (2), said implement (1) comprising a first and a second end, which second end is located further from the first hinge point (3) than the first end, the second end being provided with a reference point, wherein the distance between the point of application and the reference point in the transport position is smaller than the distance between the point of application and the reference point in the operative position, wherein the arm (2) is connected in the first hinge point (3) to a frame for carrying the implement (1), **characterized in that** the first end of the implement (1) is hingeably connected to the frame in a second hinge point (7) and **in that** the point of application in the operative position is located on or near a perpendicular line on the bottom through the centre of gravity of the implement (1).

2. A device as claimed in claim 1, **characterized in that** the connecting element (4) is hingeably connected to the implement (1) and the second end of the arm (2).

3. A device as claimed in claim 1 or 2, **characterized in that** the connecting element (4) is designed as a connection which is adjustable in length, such as a cylinder, preferably a telescopic cylinder.

4. A device as claimed in any one of the preceding claims, **characterized in that** the connecting element (4) is constituted by a guide element (6) for guiding the arm (2) and a guide path (5) along which the guide element (6) moves during or prior to the adjustment of the implement from an operative position to a transport position.

5. A device as claimed in claim 4, **characterized in that** the guide path (5) extends at least from a point of application in the transport position to a point of application in the operative position.

6. A device as claimed in claim 4 or 5, **characterized in that** the guide path (5) comprises a tube, groove or cable and the guide element (6) comprises a wheel or a pulley.

7. A device as claimed in any one of the preceding claims, **characterized in that** an adjusting element (8) for adjusting the arm (2) is disposed on the frame and connected to the arm (2).

8. A device as claimed in claim 7, **characterized in that** the adjusting element (8) is connected to an adjusting plate (9) for adjusting the arm (2), which adjusting plate (9) is hingeably connected to the arm (2).

9. A device as claimed in any one of the preceding claims, **characterized in that** the frame consists of a first frame (12) and a second frame (13), said frames being mutually hingeably connected in a third hinge point (10) which is disposed between the first and the second hinge point (7).

10. A device as claimed in any one of the preceding claims, **characterized in that** the device is provided with one or more stop means (91) for forming a stop in the transport position and/or the operative position.

11. A device as claimed in claim 10, **characterized in that** the stop means (11) comprise a chain which is disposed between the first and the second frame (13).

12. A device as claimed in any one of claims 10 or 11, **characterized in that** the stop means (11) are provided near the point of application in the transport position and/or near the point of application in the operative position.

13. A device as claimed in any one of the preceding claims, **characterized in that** the level of the centre of gravity of the implement in the transport position is lower than the maximum level reached by the centre of gravity of the implement (1) during the adjustment of the implement (1) from the operative position to the transport position.

14. A device as claimed in any one of the preceding claims, **characterized in that** the implement (1) comprises a driven implement (1), preferably a mowing machine.

## Patentansprüche

1. Vorrichtung zum Einstellen eines Geräts (1), beispielsweise eines landwirtschaftlichen Geräts, aus einer Arbeitsposition in eine Transportposition, wobei die Vorrichtung mit einem Arm (2) zum Einstellen des Geräts (1) versehen ist, wobei der Arm (2) ein erstes und ein zweites Ende aufweist, wobei das erste Ende des Armes (2) mit einem ersten Gelenkpunkt (3) zum Schwenken des Armes (2) versehen ist und das zweite Ende des Armes (2) in einem Anlenkpunkt mit einem Verbindungselement (4) zum Verbinden des Geräts (1) mit dem Arm (2) versehen ist, wobei das Gerät (1) ein erstes und ein zweites Ende aufweist, wobei das zweite Ende von dem ersten Gelenkpunkt (3) weiter entfernt ist als das erste Ende, wobei das zweite Ende einen Bezugspunkt aufweist, wobei der Abstand zwischen dem Anlenkpunkt und dem Bezugspunkt in der Transportposition kleiner ist als der Abstand zwischen dem Anlenkpunkt und dem Bezugspunkt in der Arbeitsposition, wobei der Arm (2) im ersten Gelenkpunkt (3) mit einem Rahmen zum Tragen des Geräts (1) verbunden ist,
**dadurch gekennzeichnet, dass** das erste Ende des Geräts (1) in einem zweiten Gelenkpunkt (7) schwenkbar mit dem Rahmen verbunden ist, und dass der Anlenkpunkt in der Arbeitsposition auf oder nahe einer durch den Schwerpunkt des Geräts (1) verlaufenden Senkrechten zum Boden liegt.

2. Vorrichtung nach Anspruch 1,
**dadurch gekennzeichnet, dass** das Verbindungselement (4) mit dem Gerät (1) und dem zweiten Ende des Armes (2) gelenkig verbunden ist.

3. Vorrichtung nach Anspruch 1 oder 2,
**dadurch gekennzeichnet, dass** das Verbindungselement (4) als Verbindung ausgeführt ist, die längenverstellbar ist, wie z. B. ein Zylinder, vorzugsweise ein Teleskopzylinder.

4. Vorrichtung nach einem der vorhergehenden Ansprüche,
**dadurch gekennzeichnet, dass** das Verbindungselement (4) durch ein Führungselement (6) zum Führen des Armes (2) und einen Führungsweg (5) gebildet ist, entlang dem sich das Führungselement (6) während oder vor der Einstellung des Geräts von einer Arbeitsposition in eine Transportposition bewegt.

5. Vorrichtung nach Anspruch 4,
**dadurch gekennzeichnet, dass** sich der Führungsweg (5) mindestens von einem Anlenkpunkt in der Transportposition bis zu einem Anlenkpunkt in der Arbeitsposition erstreckt.

6. Vorrichtung nach Anspruch 4 oder 5,
**dadurch gekennzeichnet, dass** der Führungsweg (5) ein Rohr, eine Rille oder ein Seil und das Führungselement (6) ein Rad oder eine Seilrolle umfasst.

7. Vorrichtung nach einem der vorhergehenden Ansprüche,
**dadurch gekennzeichnet, dass** ein Stellelement (8) zum Einstellen des Armes (2) an dem Rahmen angeordnet und mit dem Arm (2) verbunden ist.

8. Vorrichtung nach Anspruch 7,
**dadurch gekennzeichnet, dass** das Stellelement (8) mit einer Stellplatte (9) zum Einstellen des Armes (2) verbunden ist, wobei die Stellplatte (9) mit dem Arm (2) gelenkig verbunden ist.

9. Vorrichtung nach einem der vorhergehenden Ansprüche,
**dadurch gekennzeichnet, dass** der Rahmen aus einem ersten Rahmen (12) und einem zweiten Rahmen (13) besteht, wobei die Rahmen gelenkig miteinander in einem dritten Gelenkpunkt (10) verbunden sind, der zwischen dem ersten und dem zweiten Gelenkpunkt (7) angeordnet ist.

10. Vorrichtung nach einem der vorhergehenden Ansprüche,
**dadurch gekennzeichnet, dass** die Vorrichtung mit einer oder mehreren Anschlagvorrichtungen (11) versehen ist, die einen Anschlag in der Transportposition und/oder der Arbeitsposition bilden.

11. Vorrichtung nach Anspruch 10,
**dadurch gekennzeichnet, dass** die Anschlagvorrichtung (11) eine Kette umfasst, die zwischen dem ersten und dem zweiten Rahmen (13) angeordnet ist.

12. Vorrichtung nach einem der Ansprüche 10 oder 11,
**dadurch gekennzeichnet, dass** die Anschlagvorrichtung (11) nahe dem Anlenkpunkt in der Transportposition und/oder nahe dem Anlenkpunkt in der Arbeitsposition angeordnet ist.

13. Vorrichtung nach einem der vorhergehenden Ansprüche,
**dadurch gekennzeichnet, dass** die Höhe des Schwerpunktes des Geräts in der Transportposition geringer ist als die maximale Höhe, die vom Schwerpunkt des Geräts (1) während der Einstellung des Geräts (1) aus der Arbeitsposition in die Transportposition erreicht wird.

14. Vorrichtung nach einem der vorhergehenden Ansprüche,
**dadurch gekennzeichnet, dass** das Gerät (1) ein angetriebenes Gerät (1), vorzugsweise eine Mähmaschine, umfasst.

## Revendications

1. Dispositif pour apporter un outil (1), comme par exemple, un outil agricole, d'une position de travail en une position de transport, ledit dispositif étant doté d'un bras (2) pour régler l'outil (1), ledit bras (2) est doté d'une première et d'une seconde extrémité, tandis que la première extrémité du bras (2) est dotée d'un premier point d'articulation (3) permettant l'articulation dudit bras (2), et la seconde extrémité du bras (2) est dotée, en un point d'application, d'un élément de connexion (4) permettant de relier l'outil (1) au bras (2), ledit outil (1) comprenant une première et une seconde extrémités, ladite seconde extrémité est située plus loin du premier point d'articulation (3) que la première extrémité, la seconde extrémité étant dotée d'un point de référence, dans lequel la distance entre le point d'application et le point de référence dans la position de transport est inférieure à la distance entre le point d'application et le point de référence dans la position de travail, dans lequel le bras (2) est connecté au niveau du premier point d'articulation (3) à un châssis destiné à porter l'outil (1), **caractérisé en ce que** la première extrémité de l'outil (1) est connectée de manière articulée au châssis en un second point d'articulation (7) et **en ce que** le point d'application dans la position de travail est situé sur ou près d'une ligne perpendiculaire dans le bas, à travers le centre de gravité de l'outil (1).

2. Dispositif selon la revendication 1, **caractérisé en ce que** l'élément de connexion (4) est connecté de manière articulée à l'outil (1) et la seconde extrémité du bras (2).

3. Dispositif selon la revendication 1 ou 2, **caractérisé en ce que** l'élément de connexion (4) est conçu comme une connexion qui est réglable en longueur, telle qu'un cylindre, de préférence un cylindre télescopique.

4. Dispositif selon l'une quelconque des revendications précédentes, **caractérisé en ce que** l'élément de connexion (4) est constitué d'un élément de guidage (6) pour guider le bras (2) et d'un chemin de guidage (5) le long duquel l'élément de guidage (6) se déplace, pendant ou avant le réglage de l'outil d'une position de travail à une position de transport.

5. Dispositif selon la revendication 4, **caractérisé en ce que** le chemin de guidage (5) s'étend au moins d'un point d'application dans la position de transport à un point d'application dans la position de travail.

6. Dispositif selon les revendications 4 ou 5, **caractérisé en ce que** le chemin de guidage (5) comprend un tube, une cannelure ou un câble et l'élément de guidage (6) comprend une roue ou une poulie.

7. Dispositif selon l'une quelconque des revendications précédentes, **caractérisé en ce qu'**un élément de réglage (8) pour ajuster le bras (2) est disposé sur le châssis et est relié au bras (2).

8. Dispositif selon la revendication 7, **caractérisé en ce que** l'élément de réglage (8) est connecté à une plaque de réglage (9) pour régler le bras (2), ladite plaque de réglage (9) étant connectée par articulation au bras (2).

9. Dispositif selon l'une quelconque des revendications précédentes, **caractérisé en ce que** le châssis est composé d'un premier châssis (12) et d'un second châssis (13), lesdits châssis étant mutuellement raccordés de manière articulée en un troisième point d'articulation (10), qui est disposé entre le premier et le second points d'articulation (7).

10. Dispositif selon l'une quelconque des revendications précédentes, **caractérisé en ce que** le dispositif est doté d'un ou plusieurs systèmes de butée (11), afin de former une butée dans la position de transport et/ou la position de travail.

11. Dispositif selon la revendication 10, **caractérisé en ce que** les moyens de butée (11) comprennent une chaîne qui est disposée entre le premier et le second châssis (13).

12. Dispositif selon l'une quelconque des revendications 10 ou 11, **caractérisé en ce que** les moyens de butée (11) sont ménagés près du point d'application dans la position de transport et/ou près du point d'application dans la position de travail.

13. Dispositif selon l'une quelconque des revendications précédentes, **caractérisé en ce que** le niveau du centre de gravité de l'outil dans la position de transport est inférieur au niveau maximum atteint par le centre de gravité de l'outil (1) pendant le réglage de l'outil (1) de la position de travail à la position de transport.

14. Dispositif selon l'une quelconque des revendications précédentes, **caractérisé en ce que** l'outil (1) comprend un outil mené (1), de préférence une faucheuse.
